# FASCICULE DE BREVET EUROPEEN

(11) **EP 3 765 951 B1**
(45) Date de publication et mention de la délivrance du brevet: **22.06.2022**
(21) Numéro de dépôt: 19711146.1
(22) Date de dépôt: 13.02.2019
(51) Int. Cl.: G06F 3/0488, B60K 35/00, B60K 37/06, G06F 3/0482

(54) **INTERFACE TACTILE DE COMMANDE D'APPLICATIONS POUR VEHICULE**
BERÜHRUNGSEMPFINDLICHE SCHNITTSTELLE ZUR STEUERUNG VON FAHRZEUGANWENDUNGEN
TOUCH-SENSITIVE INTERFACE FOR CONTROLLING VEHICLE APPLICATIONS

(30) Priorité: 12.03.2018 FR 1852103
(43) Date de publication de la demande: 20.01.2021
(73) Titulaire: PSA Automobiles SA, 78300 Poissy (FR)
(72) Inventeur: JOUBERT, Morgan, 78114 MAGNY LES HAMEAUX (FR); POGNON, Jean Luc, 92800 PUTEAUX (FR); DIAKITE KABA, Saran, 91570 BIEVRES (FR); HAMROUN, Darris, 75011 PARIS 11 (FR)
(86) Numéro de dépôt international: PCT/FR2019/050307
(87) Numéro de publication internationale: WO 2019/175484

(56) Documents cités:
- EP-A1- 2 924 551
- EP-A1- 2 955 614
- EP-A1- 3 282 352
- EP-A2- 3 254 882
- US-A1- 2015 268 842

## Description

### Domaine de l'invention

La présente invention concerne d'une manière générale le domaine des interfaces de commande tactiles pour véhicules, en particulier de type automobile.

### Arrière-plan de l'invention

Ces dernières années ont été marquées par l'émergence des interfaces de commande tactiles dans de nombreux domaines de la vie courante.

Dans l'automobile, cette révolution s'est traduite notamment au niveau des tableaux de bord des véhicules dont les dispositifs d'info-divertissement intègrent désormais de telles interfaces de commande tactiles permettant de s'affranchir des façades de commande conventionnelles dotées de nombreux actionneurs mécaniques tels que boutons, molettes, curseurs, etc...

Ces interfaces de commande tactiles comportent classiquement un écran tactile présentant une surface d'affichage, ainsi qu'un module d'affichage apte à gérer l'affichage desdites applications sur ledit écran.

Elles permettent à l'utilisateur, et notamment au conducteur, de naviguer dans une arborescence de menus lui donnant accès à la commande du système de ventilation/climatisation du véhicule ainsi qu'à celle d'applications audio-vidéo, de navigation, de télécommunication, etc...

Afin de faciliter la navigation de l'utilisateur dans cette arborescence, on connaît ainsi de la demande de brevet européenne EP 2 751 650 une telle interface de commande dotée d'un écran tactile rectangulaire dont la surface d'affichage comporte une zone principale affichant la représentation d'une unique application à la fois et comprenant un bouton tactile de commande de cette application, ainsi que quatre zones périphériques s'étendant le long de ses quatre bords et se présentant sous la forme de barres contenant chacune une étiquette textuelle associée à une application respective de navigation, d'information véhicule, de divertissement et de communication.

L'écran tactile est en outre configuré pour basculer l'affichage de la zone principale depuis la représentation d'une application vers la représentation d'une autre application suite à la détection d'un geste de doigt prédéterminé.

La période récente a également été marquée par le développement des véhicules connectés au réseau Internet, soit directement via un module de télécommunication intégré doté d'un modem (ou un modem/routeur) GSM/GPRS ou UMTS associé à une carte SIM ou USIM, soit via le Smartphone du conducteur ou d'un passager.

Cette évolution couplée à l'apparition depuis peu de dispositifs d'assistance à la conduite aptes à gérer de manière entièrement autonome la conduite du véhicule durant de longues périodes, a eu pour conséquence de permettre à l'utilisateur, et notamment au conducteur, d'accéder à une innombrable quantité de nouvelles applications contrôlables via l'interface tactile de commande leur écran tactile.

Cette multiplication des contenus accessibles entraine inévitablement une complexification de l'arborescence de l'interface tactile particulièrement délicate à appréhender pour le conducteur qui a tendance à s'y perdre et peut éprouver certaines difficultés à accéder rapidement à l'application désirée.

Cela est tout particulièrement le cas pour le conducteur durant les phases de conduite manuelles durant lesquelles ce dernier doit détourner le moins possible son regard de la route.

Le document EP 2 955 614 divulgue une interface utilisateur et un procédé pour adapter une mise à l'échelle sémantique d'une tuile sur une unité d'affichage d'une interface utilisateur. Le document EP 3 282 352 divulgue un procédé de fonctionnement d'un dispositif, dans lequel une interface utilisateur graphique est générée et affichée sur une surface d'affichage. Le document EP 3 254 882 divulgue des dispositifs d'affichage et de commande multifonctionnels pour un véhicule automobile. Le document US2015268842 divulgue un procédé de configuration de l'interface utilisateur d'une unité de tête d'un véhicule à l'aide d'un terminal mobile. Le document EP 2 924 551 divulgue un procédé pour fournir une interface utilisateur graphique dans un véhicule, le véhicule comprenant au moins deux fonctions relatives au véhicule.

### Objet et résumé de l'invention

La présente invention vise donc à rendre la navigation dans les applications disponibles plus simple, rapide et intuitive pour l'utilisateur.

Elle propose à cet effet, une interface tactile de commande d'applications pour véhicule conformément à la revendication 1.

L'interface tactile de commande selon l'invention propose ainsi dans sa configuration d'accueil une vue d'ensemble proposant une vue synthétique des applications en fonctionnement tout en offrant un accès direct à un nombre limité d'autres applications par catégories, de sorte à éviter le plus possible à l'utilisateur de naviguer dans des sous-menus complexes pour lancer l'application qu'il souhaite.

Selon des caractéristiques préférées de ladite interface, prises seules ou en combinaison :
- ladite représentation réduite comprend des moyens tactiles de commande permettant à l'utilisateur d'interagir de manière limitée avec ladite application en fonctionnement ;
- le ou l'un desdits critères de sélection correspond à la fréquence d'utilisation desdites applications associées ;
- le nombre prédéterminé de dites icônes tactiles est compris entre 3 et 6 ;
- chaque sous-zone d'affichage comprend un bouton tactile affublé d'un pictogramme représentatif de la catégorie correspondante et configuré de sorte que son actionnement entraine, lorsque ladite sous-zone correspondante affiche une représentation réduite d'une application en fonctionnement, le basculement de l'affichage de cette application sur l'ensemble de ladite zone principale d'affichage ;
- ledit bouton tactile est configuré de sorte que son actionnement entraine, lorsque ladite sous-zone correspondante affiche un nombre prédéterminé d'icônes tactiles, l'affichage d'un sous-menu s'étendant sur l'ensemble de ladite zone principale d'affichage et permettant à l'utilisateur d'accéder à l'ensemble des applications compatibles avec le mode de conduite en cours ;
- le nombre de sous-zones d'affichage est compris entre 3 et 6 ; et/ou
- dans ladite configuration d'accueil, ladite surface d'affichage comprend également un bandeau latéral s'étendant verticalement le long de l'un de ses côtés latéraux et affichant des informations sur les réglages actuels du système de ventilation/climatisation dudit véhicule.

L'invention vise également sous un second aspect un dispositif d'info-divertissement pour véhicule comportant une telle interface tactile.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est un schéma fonctionnel d'un dispositif d'info-divertissement de véhicule automobile comportant une interface tactile de commande selon l'invention ; et
- les figures 2 à 5 représentent différentes vues de la surface d'affichage de l'écran de l'interface tactile.

### Description détaillée d'un mode de réalisation

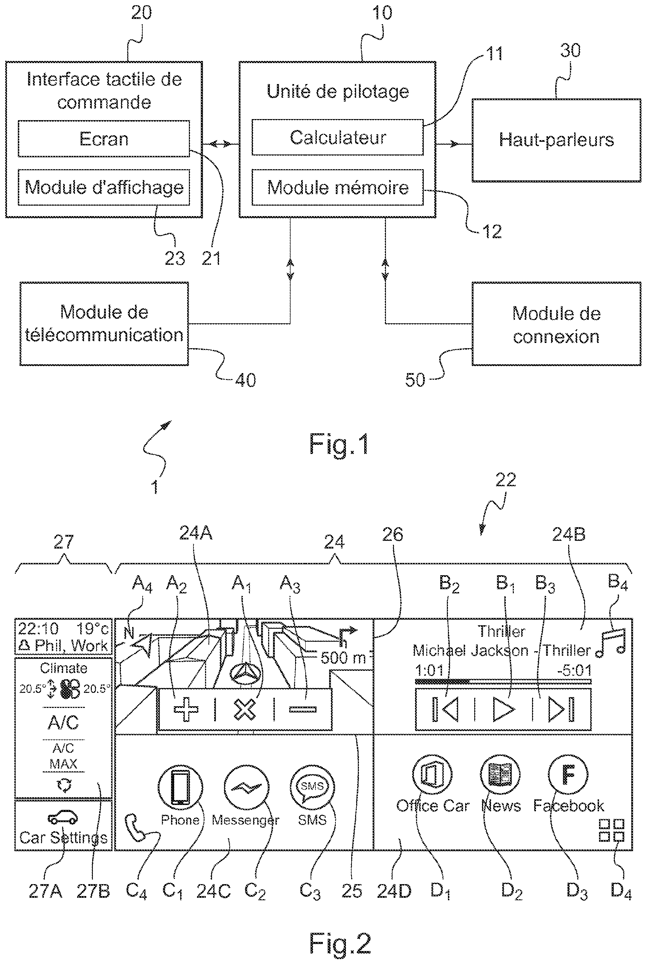

En référence à la figure 1, le dispositif d'info-divertissement 1 comprend une unité de pilotage 10, une interface tactile de commande 20 implantée au niveau de la console centrale du tableau de bord et des haut-parleurs 30 reliés à cette unité de pilotage 10.

Le dispositif d'info-divertissement 1 comprend également un module de télécommunication 40 comportant un modem (ou un modem/routeur) GSM/GPRS ou UMTS associé à une carte SIM ou USIM et permettant notamment au véhicule d'accéder au réseau Internet.

L'unité de pilotage 10 comporte un calculateur 11 doté d'un ou de plusieurs microprocesseurs interconnectés, ainsi qu'un module mémoire 12 comprenant de la mémoire non volatile de type EEPROM ou FLASH ainsi que de la mémoire volatile.

La mémoire non volatile est destinée à stocker différents types de données telles que les paramètres de configuration de certains modules fonctionnels ainsi que des applications pré-installées dès l'origine et/ou téléchargées via une plate-forme d'applications en ligne dédiée.

Le dispositif d'info-divertissement 10 comporte également un module de connexion 50 destiné à établir un lien de communication avec un terminal mobile via un ou plusieurs protocoles de connexion filaires (USB, IEEE1394, HDMI, etc...) et/ou sans fil (Bluetooth, Wi-Fi, etc...).

Par « terminal mobile », on désigne ici un téléphone de type Smartphone, une tablette électronique, un PDA (Personal Digital Assistant), ou tout autre appareil électronique nomade doté d'un système d'exploitation (« Android », « IOS », « Windows Phone » ou autre) et comportant une pluralité d'applications directement intégrées à ce système d'exploitation ou bien téléchargées puis stockées dans un module mémoire.

Ce module de connexion 50 intégre une solution de duplication ou mirroring en anglais (par exemple : Apple^{®} CarPlay^{®}, Google^{®} Android Auto^{®} ou bien encore Mirrorlink^{®}) permettant pendant la conduite, de reproduire en temps réel respectivement sur l'interface tactile de commande 20 (avec une interface visuelle adaptée) et sur les haut-parleurs 30 l'affichage et le son générés par certaines applications hébergées sur le terminal mobile.

Ces applications accessibles via cette solution de duplication seront associées dans la suite de cette description à l'adjectif « débarquées », par opposition aux applications intégrées au dispositif d'info-divertissement 1 du véhicule qui seront affublées de l'adjectif « embarquées ».

L'unité de pilotage 10 gère, de manière autonome ou via les instructions transmises par l'utilisateur à l'aide de l'interface tactile de commande20, le fonctionnement de certains modules fonctionnels du véhicule (tels que notamment les modules de ventilation/climatisation ou d'assistance à la conduite) ainsi que celui des applications embarquées et débarquées disponibles.

L'interface tactile de commande 20 comporte un écran 21 présentant une surface d'affichage rectangulaire 22 (voir figures 2 à 5) dont la diagonale est avantageusement comprise entre 25 et 30 cm (soit entre 10 et 12 pouces), et étant doté d'une matrice tactile capacitive permettant d'identifier la position du doigt de l'usager en détectant les transferts de charge électrique s'opérant vers ce doigt depuis la zone de la surface d'affichage avec laquelle il est en contact.

De préférence, cette matrice est de type multipoints ce qui signifie qu'elle est capable de détecter plusieurs appuis simultanés de différents doigts de l'usager sur la surface d'affichage.

En variante, et selon certains critères de prix, de résistance aux chocs, de précision ou de taille, la matrice tactile sera d'un type différent : résistive, infrarouge, à ondes de surface ou encore à jauges de contraintes.

L'interface tactile de commande 20 comprend également un module d'affichage 23 configuré pour afficher sur l'écran 21 par défaut au démarrage du véhicule une configuration d'accueil illustrée par la vue de la figure 2.

Dans cette configuration d'accueil, la surface d'affichage 22 de l'écran 21 comprend une zone principale d'affichage rectangulaire 24 représentant au moins la majeure partie de cette surface, et avantageusement entre 80 et 100 % de celle-ci.

Cette zone principale d'affichage est divisée en quatre sous-zones d'affichages rectangulaires de mêmes dimensions 24A, 24B, 24C, 24D séparées les unes des autres par deux lignes de démarcation horizontale 25 et verticale 26, correspondant aux deux médiatrices de cette zone principale d'affichage.

Les sous-zones d'affichage 24A, 24B, 24C, 24D sont chacune dédiées à une catégorie respective d'applications (« déplacement » pour la sous-zone 24A située en haut à gauche, « audio-vidéo » pour la sous-zone 24B située en haut à droite, « communication » pour la sous-zone 24C située en bas à gauche, et « autres applications » pour la sous-zone 24D située en bas à droite).

On notera que chaque catégorie d'applications peut comprendre à la fois des applications de type « embarquées » et des applications de type « débarquées ».

Le module d'affichage 23 est configuré de sorte que chacune de ces sous-zones puisse présenter deux types d'affichages différents suivant les circonstances.

Plus précisément, lorsqu'une application de la catégorie correspondante est en fonctionnement, la sous-zone affiche une représentation réduite de type « widget » de ladite application affichant des informations graphiques et/ou textuelles qui peuvent évoluer dynamiquement sous son contrôle.

Sur la vue de la figure 2, les deux sous-zones supérieures 24A, 24B présentent ce premier type d'affichage (la zone supérieure de gauche 24A affichant une représentation réduite d'une application de navigation GPS assurant le guidage du véhicule vers une destination prédéfinie, tandis que la zone supérieure de droite 24B affiche une représentation réduite d'une application de lecture audio fonctionnant en simultané et reproduisant un fichier musical).

Cette représentation réduite comprend avantageusement des moyens tactiles de commande, tels que boutons, menus, barres de défilement ou autres, permettant à l'utilisateur d'interagir de manière limitée avec l'application en fonctionnement.

En référence à cette figure 2, les sous-zones supérieures 24A, 24B comprennent ainsi chacune trois boutons tactiles A₁, A₂, A₃ et B₁, B₂, B₃ affublés de trois pictogrammes respectifs représentatifs des commandes associées à ces boutons.

Plus précisément, la sous-zone supérieure de gauche 24A comprend un premier bouton tactile A₁ affublé d'un pictogramme en forme de croix permettant d'annuler la destination sélectionnée, ainsi que deux autres boutons tactiles A₂ et A₃ affublés respectivement de pictogrammes en forme de « + » et de « - » et permettant d'augmenter ou de diminuer le niveau de zoom.

A l'inverse, lorsqu'aucune application de la catégorie correspondante n'est en fonctionnement, la sous-zone affiche un nombre prédéterminé d'icônes tactiles.

Sur la vue de la figure 2, les deux sous-zones inférieures 24C, 24D présentent ce second type d'affichage et comprennent chacune trois icônes tactiles C₁, C₂, C₃ et D₁, D₂, D₃ permettant de lancer trois applications de la catégorie correspondante.

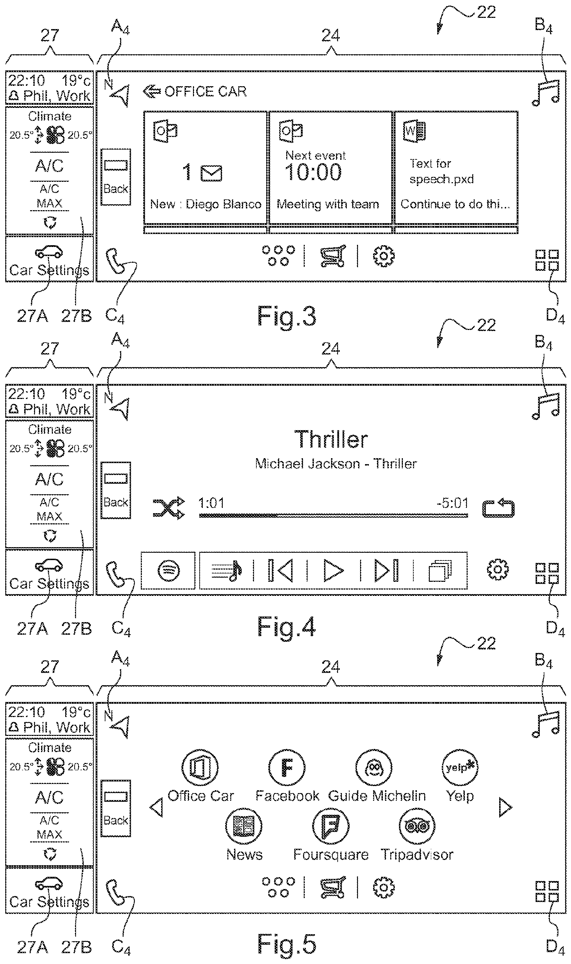

Ces icônes tactiles sont représentatives d'applications de la catégorie correspondante et permettant de lancer ces applications et de les afficher sur la totalité de la zone principale d'affichage 24 tel qu'illustré sur la figure 3 représentant une vue de la surface d'affichage 22 de l'écran 21 après un appui sur l'icône D₁ de la sous-zone inférieure droite 24D.

En variante, le nombre d'icônes tactiles peut varier en fonction notamment des dimensions de ces sous-zones d'affichage. De préférence, ce nombre sera compris entre 3 et 6 afin de ne pas trop surcharger la configuration d'accueil.

Le module d'affichage 23 est configuré pour sélectionner, de manière automatique et suivant un ou plusieurs critères prédéterminés, les icônes tactiles affichées dans chaque sous-zone d'affichage parmi celles associées à une liste prédéfinie d'applications compatibles avec le mode de conduite en cours, stockée dans le module mémoire de l'unité de pilotage.

Par exemple, dans la catégorie « audio-vidéo », les icônes potentiellement affichables en mode de conduite manuel seront limitées à celles associées à des applications de lecture de fichiers audio.

Avantageusement, le ou l'un des critères de sélection des icônes affichées correspond à la fréquence d'utilisation des applications associées.

Chaque sous-zone d'affichage 24A, 24B, 24C, 24D comprend également et quel que soit le type d'affichage en cours, un bouton tactile A₄, B₄, C₄, D₄ affublé d'un pictogramme représentatif de la catégorie correspondante (respectivement et tel qu'illustré sur la figure 2, une flèche associé à la lettre N pour la sous-zone supérieure gauche 24A correspondant à la catégorie « déplacement », une note de musique pour la sous-zone supérieure droite 24B correspondant à la catégorie « audio-vidéo », un combiné téléphonique pour la sous-zone inférieure gauche 24C correspondant à la catégorie « communication », et une matrice 2x2 constituée de quatre carrés pour la sous-zone inférieure droite 24D correspondant à la catégorie « autres applications »).

Lorsque la sous-zone d'affichage correspondante affiche une représentation réduite de type « widget » de l'application en fonctionnement (cas des deux sous-zones supérieures 24A, 24B sur la figure 2), ce bouton tactile est configuré de sorte que son actionnement entraine le basculement de l'affichage de cette application sur l'ensemble de la zone principale d'affichage 24 avec un nombre plus important de moyens tactiles de contrôle permettant à l'utilisateur d'interagir de manière étendue avec elle, tel qu'illustré sur la figure 4 représentant une vue de la surface d'affichage 22 de l'écran 21 après un appui sur le bouton B₄ affublé du pictogramme en forme de note de musique de la sous-zone supérieure droite 24B.

A l'inverse, lorsque la sous-zone d'affichage correspondante affiche un nombre prédéterminé d'icônes tactiles (cas des deux sous-zones inférieures sur la figure 2), ce bouton tactile est configuré de sorte que son actionnement entraine, l'affichage d'un sous-menu s'étendant sur l'ensemble de la zone principale d'affichage 24 et permettant à l'utilisateur d'accéder à l'ensemble des applications compatibles avec le mode de conduite en cours, tel qu'illustré sur la figure 5 représentant une vue de l'écran 21 après un appui sur le bouton D₄ affublé du pictogramme représentant une matrice 2x2 constituée de quatre petits carrés.

Pour une meilleure ergonomie d'utilisation, ces quatre boutons A₄, B₄, C₄, D₄ sont avantageusement disposés aux quatre coins de la zone principale d'affichage 24.

Dans sa configuration d'accueil, la surface d'affichage 22 de l'écran 21 comprend également de manière avantageuse un bandeau latéral 27 s'étendant verticalement le long de l'un de ses côtés latéraux (en l'occurrence, le gauche).

Ce bandeau vertical 27 présente une portion tactile 27A affichant des informations sur les réglages actuels du système de ventilation/climatisation et dont l'actionnement permettant d'accéder au menu de paramétrage de ce système.

Le bandeau 27 comprend également un bouton tactile 27B permettant d'accéder au menu de réglage de certains paramètres du véhicule.

Selon des variantes de réalisation non représentées, ce bandeau latéral est absent et la zone principale d'affichage occupe l'intégralité de la surface d'affichage de l'écran dans sa configuration d'accueil.

Selon d'autres variantes de réalisation non représentées, cette zone principale d'affichage est divisée dans sa configuration d'accueil en un nombre différent de sous-zones d'affichages, compris avantageusement entre 3 et 6.

Bien entendu, la présente invention ne se limite pas aux formes de réalisation décrites et représentées, mais englobe également toutes les variantes d'exécution à la portée de l'homme du métier.

## Revendications

1. Interface tactile de commande d'applications pour véhicule comportant un écran tactile (21) présentant une surface d'affichage (22), ainsi qu'un module d'affichage (23) apte à gérer l'affichage desdites applications sur ledit écran (21) ;
dans lequel ledit module d'affichage (23) est configuré pour afficher sur ledit écran (21) une configuration d'accueil dans laquelle ladite surface d'affichage (22) comprend une zone principale d'affichage (24) représentant au moins la majeure partie de cette surface d'affichage (22) et étant divisée en plusieurs sous-zones d'affichage (24A, 24B, 24C, 24D) dédiées chacune à une catégorie respective d'applications,
ledit module d'affichage (23) étant en outre configuré de sorte que chaque dite sous-zone d'affichage (24A, 24B, 24C, 24D) affiche :
▪ lorsqu'une application de la catégorie correspondante est en fonctionnement, une représentation réduite de ladite application, et
▪ lorsqu'aucune application de la catégorie correspondante n'est en fonctionnement, un nombre prédéterminé d'icônes tactiles (C₁, C₂, C₃, D₁, D₂, D₃) représentatives d'applications de la catégorie correspondante et permettant de lancer ces applications et de les afficher sur la totalité de ladite zone principale d'affichage (24),
et dans lequel ledit module d'affichage (23) est configuré pour sélectionner, de manière automatique et suivant un ou plusieurs critères prédéterminés, lesdites icônes tactiles (C₁, C₂, C₃, D₁, D₂, D₃) parmi celles associées à une liste prédéfinie d'applications compatibles avec le mode de conduite en cours.

2. Interface tactile selon la revendication 1, **caractérisée en ce que** ladite représentation réduite comprend des moyens tactiles de commande (A₁, A₂, A₃, B₁, B₂, B₃) permettant à l'utilisateur d'interagir de manière limitée avec ladite application en fonctionnement.

3. Interface tactile selon l'une des revendications 1 ou 2, **caractérisée en ce que** le ou l'un desdits critères de sélection correspond à la fréquence d'utilisation desdites applications associées.

4. Interface tactile selon l'une des revendications 1 à 3, **caractérisée en ce que** le nombre prédéterminé de dites icônes tactiles (C₁, C₂, C₃, D₁, D₂, D₃) est compris entre 3 et 6.

5. Interface tactile selon l'une des revendications 1 à 4, **caractérisée en ce que** chaque sous-zone d'affichage (24A, 24B, 24C, 24D) comprend un bouton tactile (A₄, B₄, C₄, D₄) affublé d'un pictogramme représentatif de la catégorie correspondante et configuré de sorte que son actionnement entraine, lorsque ladite sous-zone correspondante (24A, 24B) affiche une représentation réduite d'une application en fonctionnement, le basculement de l'affichage de cette application sur l'ensemble de ladite zone principale d'affichage (24).

6. Interface tactile selon la revendication 5, **caractérisée en ce que** ledit bouton tactile (A₄, B₄, C4, D₄) est configuré de sorte que son actionnement entraine, lorsque ladite sous-zone correspondante (24C, 24D) affiche un nombre prédéterminé d'icônes tactiles (C₁, C₂, C₃, D₁, D₂, D₃), l'affichage d'un sous-menu s'étendant sur l'ensemble de ladite zone principale d'affichage (24) et permettant à l'utilisateur d'accéder à l'ensemble des applications compatibles avec le mode de conduite en cours.

7. Interface tactile selon l'une des revendications 1 à 6, **caractérisée en ce que** le nombre de sous-zones d'affichage (24A, 24B, 24C, 24D) est compris entre 3 et 6.

8. Interface tactile selon l'une des revendications 1 à 7, **caractérisée en ce que** dans ladite configuration d'accueil, ladite surface d'affichage (22) comprend également un bandeau latéral (27) s'étendant verticalement le long de l'un de ses côtés latéraux et affichant des informations sur les réglages actuels du système de ventilation/climatisation dudit véhicule.

9. Dispositif d'info-divertissement pour véhicule comportant une interface tactile selon l'une des revendications 1 à 8.

## Patentansprüche

1. Berührungsschnittstelle zur Steuerung von Anwendungen für ein Fahrzeug mit einem berührungsempfindlichen Bildschirm (21), der eine Anzeigefläche (22) aufweist, sowie einem Anzeigemodul (23), das geeignet ist, die Anzeige der genannten Anwendungen auf dem genannten Bildschirm (21) zu verwalten ;
wobei das Anzeigemodul (23) so konfiguriert ist, dass es auf dem Bildschirm (21) eine Startkonfiguration anzeigt, bei der die Anzeigefläche (22) einen Hauptanzeigebereich (24) umfasst, der zumindest den größten Teil dieser Anzeigefläche (22) ausmacht und in mehrere Unteranzeigebereiche (24A, 24B, 24C, 24D) unterteilt ist, die jeweils einer entsprechenden Kategorie von Anwendungen gewidmet sind,
wobei das Anzeigemodul (23) außerdem so konfiguriert ist, dass jeder der besagten Anzeigeunterbereiche (24A, 24B, 24C, 24D) anzeigt:
• wenn eine Anwendung der entsprechenden Kategorie in Betrieb ist, eine verkleinerte Darstellung dieser Anwendung, und
• wenn keine Anwendung der entsprechenden Kategorie in Betrieb ist, eine vorbestimmte Anzahl von Berührungssymbolen (C1, C2, C3, D1, D2, D3), die Anwendungen der entsprechenden Kategorie darstellen und es ermöglichen, diese Anwendungen zu starten und sie über den gesamten Hauptanzeigebereich (24) anzuzeigen,
und wobei das Anzeigemodul (23) so konfiguriert ist, dass es automatisch und nach einem oder mehreren vorbestimmten Kriterien die taktilen Symbole (C1, C2, C3, D1, D2, D3) aus denen auswählt, die mit einer vordefinierten Liste von Anwendungen verbunden sind, die mit dem aktuellen Fahrmodus kompatibel sind.

2. Berührungsschnittstelle nach Anspruch 1, **dadurch gekennzeichnet, dass** die reduzierte Darstellung berührungsempfindliche Steuermittel (A1, A2, A3, B1, B2, B3) umfasst, die es dem Benutzer ermöglichen, in begrenztem Umfang mit der laufenden Anwendung zu interagieren.

3. Berührungsschnittstelle nach einem der Ansprüche 1 oder 2, **dadurch gekennzeichnet, dass** das oder eines der Auswahlkriterien der Häufigkeit der Nutzung der zugehörigen Anwendungen entspricht.

4. Berührungsschnittstelle nach einem der Ansprüche 1 bis 3, **dadurch gekennzeichnet, dass** die vorbestimmte Anzahl der sogenannten Berührungssymbole (C1, C2, C3, D1, D2, D3) zwischen 3 und 6 liegt.

5. Berührungsschnittstelle nach einem der Ansprüche 1 bis 4, **dadurch gekennzeichnet, dass** jeder Anzeigeunterbereich (24A, 24B, 24C, 24D) eine Berührungstaste (A4, B4, C4, D4) umfasst, die mit einem für die entsprechende Kategorie repräsentativen Piktogramm versehen und so konfiguriert ist, dass ihre Betätigung dazu führt, dass die Anzeige dieser Anwendung auf den gesamten Hauptanzeigebereich (24) umgeschaltet wird, wenn der entsprechende Unterbereich (24A, 24B) eine verkleinerte Darstellung einer funktionierenden Anwendung anzeigt.

6. Berührungsschnittstelle nach Anspruch 5, **dadurch gekennzeichnet, dass** die Berührungstaste (A4, B4, C4, D4) so konfiguriert ist, dass ihre Betätigung, wenn der entsprechende Unterbereich (24C, 24D) eine vorbestimmte Anzahl von Berührungssymbolen (C1, C2, C3, D1, D2, D3) anzeigt, die Anzeige eines Untermenüs bewirkt, das sich über den gesamten Hauptanzeigebereich (24) erstreckt und dem Benutzer den Zugriff auf alle Anwendungen ermöglicht, die mit dem aktuellen Fahrmodus kompatibel sind.

7. Berührungsschnittstelle nach einem der Ansprüche 1 bis 6, **dadurch gekennzeichnet, dass** die Anzahl der Unteranzeigebereiche (24A, 24B, 24C, 24D) zwischen 3 und 6 liegt.

8. Berührungsschnittstelle nach einem der Ansprüche 1 bis 7, **dadurch gekennzeichnet, dass** in der Home-Konfiguration die Anzeigefläche (22) auch eine Seitenleiste (27) umfasst, die sich vertikal entlang einer ihrer Seitenwände erstreckt und Informationen über die aktuellen Einstellungen des Belüftungs-/Klimasystems des Fahrzeugs anzeigt.

9. Infotainmentvorrichtung für ein Fahrzeug mit einer berührungsempfindlichen Schnittstelle nach einem der Ansprüche 1 bis 8.

## Claims

1. Touch interface for controlling vehicle applications comprising a touch screen (21) having a display surface (22), as well as a display module (23) able to manage the display of said applications on said screen (21);
wherein said display module (23) is configured to display on said screen (21) a home configuration in which said display surface (22) comprises a main display area (24) representing at least the major part of that display surface (22) and being divided into a plurality of display sub-areas (24A, 24B, 24C, 24D) each dedicated to a respective category of applications
said display module (23) being further configured so that each said display sub-area (24A, 24B, 24C, 24D) displays :
• when an application of the corresponding category is in operation, a reduced representation of said application, and
• when no application of the corresponding category is in operation, a predetermined number of tactile icons (C1, C2, C3, D1, D2, D3) representative of applications of the corresponding category and enabling those applications to be launched and displayed over the whole of said main display area (24)
and wherein said display module (23) is configured to select, automatically and according to one or more predetermined criteria, said tactile icons (C1, C2, C3, D1, D2, D3) from those associated with a predefined list of applications compatible with the current driving mode.

2. The touch interface according to claim 1, **characterised in that** said reduced representation comprises tactile control means (A1, A2, A3, B1, B2, B3) allowing the user to interact in a limited manner with said application in operation.

3. A touch interface according to one of claims 1 or 2, **characterized in that** the or one of said selection criteria corresponds to the frequency of use of said associated applications.

4. Touch interface according to one of claims 1 to 3, **characterized in that** the predetermined number of said touch icons (C1, C2, C3, D1, D2, D3) is between 3 and 6.

5. Touch interface according to one of claims 1 to 4, **characterised in that** each display sub-area (24A, 24B, 24C, 24D) comprises a touch button (A4, B4, C4, D4) provided with a pictogram representative of the corresponding category and configured so that its actuation causes, when said corresponding sub-area (24A, 24B) displays a reduced representation of an application in operation, the display of this application to switch over to the entirety of said main display area (24).

6. Touch interface according to claim 5, **characterised in that** said touch button (A4, B4, C4, D4) is configured so that its actuation causes, when said corresponding sub-area (24C, 24D) displays a predetermined number of touch icons (C1, C2, C3, D1, D2, D3), the display of a sub-menu extending over the whole of said main display area (24) and allowing the user to access all the applications compatible with the current driving mode.

7. Touch interface according to one of claims 1 to 6, **characterised in that** the number of display sub-areas (24A, 24B, 24C, 24D) is between 3 and 6.

8. Touch interface according to any of the claims 1 to 7, **characterized in that** in said home configuration said display surface (22) also comprises a side strip (27) extending vertically along one of its lateral sides and displaying information on the current settings of the ventilation/air conditioning system of said vehicle./

9. A vehicle infotainment device comprising a touch interface according to any of claims 1 to 8.
